# EUROPÄISCHE PATENTSCHRIFT

(11) **EP 1 690 821 B1**
(45) Veröffentlichungstag und Bekanntmachung des Hinweises auf die Patenterteilung: **29.10.2008**
(21) Anmeldenummer: 05026176.7
(22) Anmeldetag: 01.12.2005
(51) Int. Cl.: B66C 23/697

(54) **Selbsteinstellendes Gleitstück für Teleskopkranausleger**
Self adjusting sliding bearing for a telescopic crane
Elément de glissement auto-réglable pour une grue télescopique

(30) Priorität: 10.02.2005 DE 102005006118
(43) Veröffentlichungstag der Anmeldung: 16.08.2006
(73) Patentinhaber: Grove U.S. LLC, Shady Grove, Pennsylvania 17256 (US)
(72) Erfinder: Brinkmann, Jan, 26125 Oldenburg (DE); Paschke, Franz, 26452 Sande (DE); Tepper, Rocco, 26441 Jever (DE)
(74) Vertreter: Rögner, Jürgen

(56) Entgegenhaltungen:
- EP-A- 1 004 784
- EP-A- 1 529 749
- DE-U1- 20 015 831
- JP-A- 2004 035 180
- US-A- 6 062 404

## Beschreibung

Die Erfindung betrifft eine Teleskopkranausleger-Gleitstückanordnungmit einem selbsteinstellenden Gleitstück, d.h. einem Gleitstück, das dazu in der Lage ist, innerhalb seiner Anordnung im oder am Teleskopausleger, seine Breite den vorhandenen Gegebenheiten und Notwendigkeiten anzupassen um seine Aufgaben optimal erfüllen zu können.

Wenn im vorliegenden Kontext der Begriff "Gleitstückanordnung" verwendet wird, so umfasst dieser die Teile des Gleitstücks selbst sowie diejenigen Teile des Teleskopauslegers bzw. der Auslegerteile, die mit dem Gleitstück zusammenwirken, um dessen Funktion sicherzustellen.

Gleitstücke dienen bei Teleskopauslegern dazu, das Teleskopieren der Teleskopteile gegeneinander mit möglichst geringen Reibverlusten und somit geringem Verschleiß an den Teleskopteilen selbst zu ermöglichen. Sie werden üblicherweise einfach zwischen die Teleskopteile eingebracht und meist an einem Teleskopteil, dem äußeren oder dem inneren befestigt, so dass das jeweils andere Teleskopteil über die Gleitfläche des Gleitstückes laufen kann.

Der Nachteil solcher herkömmlicher Lösungen besteht darin, dass sie genaue Einstellungen nur schwer und mit hohem Aufwand in nur einer definierten Verriegelungsposition ermöglichen, Nacheinstellungen (z.B. bei Verschleiß) erfordern und ohne besondere Nachstellungen oder bei falscher Einstellung Passungenauigkeiten hervorrufen.

Durch den Einsatz von hochfesten Werkstoffen bei der Herstellung von Teleskopauslegern und die durch die einhergehende Reduzierung der Ausleger-Blechdicken werden die Verformungen dieser Ausleger im Betrieb deutlich erhöht. Solche in Kauf genommenen Verformungen hervorgerufen aus
(a) Lose in den Gleitstücken
(b) Blechbiegungen infolge punktueller Lasteinleitungen (Membranwirkungen)
(c) Höherer Ausnutzung der Querschnittsteile
können den Kranbetrieb erschweren, weshalb dafür gesorgt werden muss, sämtliche Verformungen, die aus oben genannten Gründen auftreten, auf ein Minimum zu begrenzen. Einen besonders großen Einfluss auf (a) und (b) haben dabei die Passgenauigkeiten und die Ausbildung der Gleitstücke.

Aus der DE 200 15 831 U1 ist eine teleskopierbare Hubsäule mit einem Innen- und einem Außenrohr bekannt, die gegeneinander verfahrbar sind. Dabei sind zwischen den Rohren Ringspalte vorgesehen, in denen zum Ausgleich der fertigungstechnisch bedingten Toleranzen einstellbare Gleitschuhe angeordnet sind, die aus jeweils zwei mit Schrägflächen versehenen, gegeneinander verschiebbaren Gleitelementen bestehen. Das eine Gleitelement ist fest mit einem Rohr verbunden und das andere Gleitelement gegenüber diesem verschiebbar angeordnet. Eine Klemmschraube ermöglicht das Sichern des verschiebbaren Gleitelements auf dem festen Gleitelement und dabei einen Toleranzausgleich zwischen den Rohren.

Dabei findet die Einstellung der Position der Gleitelemente zueinander zum Ausgleich der Toleranz bei der Montage statt, womit ein nachträglicher Toleranzausgleich, beispielsweise während des Betriebes nicht möglich ist.

Es ist deshalb die Aufgabe der vorliegenden Erfindung, eine Teleskopausleger-Gleitstückanordnung bereitzustellen, welche bei beliebiger Teleskopierstellung eine optimale Passgenauigkeit bieten, um Auslegerverformungen auf ein Minimum zu beschränken.

Diese Aufgabe wird erfindungsgemäß durch ein Teleskopausleger-Gleitstückanordnung gelöst, die die Merkmale des anliegenden Anspruchs 1 aufweist. Die Unteransprüche definieren bevorzugte Ausführungsformen der Erfindung.

Gemäß der Erfindung weist das Gleitstück der Teleskopausleger-Gleitstückanordnung mindestens zwei zusammenwirkende Gleitstückteile auf, die gegeneinander vorgespannt und an einer Schrägfläche gegeneinander verschiebbar sind, so dass sich die Gesamtbreite des Gleitstücks je nach Lage der Gleitstückteile zueinander ändert. Der besondere Vorteil dieser Teilung des Gleitstücks in mindestens zwei Teile liegt darin, dass sich damit ohne weiteres unterschiedliche Breiten des gesamten Gleitstücks einstellen lassen.

Das weist Gleitstück einen Schubkeil und ein Gleitteil auf, wobei durch die Positionierung des Schubkeils gegenüber dem Gleitteil eine Gleitfläche des Gleitteils verschoben werden kann. Das Gleitteil ist dementsprechend das Teil, welches die Gleitfläche umfasst, an welcher ein Teleskopteil beim Teleskopiervorgang gleitet.

Der Schubkeil des Gleitstücks ist dabei über eine Federspannvorrichtung an einem Teleskopteil befestigt.

Die Keile werden bevorzugt mit ihrer Schräge so ausgebildet, dass die Vorspannung in Höhenrichtung entlang einer steilen Schrägfläche läuft, wohingegen die aufzunehmende Last (äußere Krafteinleitung) in Breitenrichtung (im Wesentlichen quer zur Vorspannung) auf eine flache Schräge trifft. Durch die Kraftaufteilung an der Schrägfläche können mit einer relativ kleinen Kraft (hervorgerufen aus der Vorspannung) die beiden Einzelteile gegeneinander verschoben werden, woraus die Anpassung des Gleitstückes an die Gegengleitfläche erfolgt. Durch die Auswahl der einzelnen Materialien bezüglich ihres Reibverhältnisses untereinander und der Gegenwirkung der Vorspannung ist es aufgrund einer hinreichend flachen Schräge möglich, die Verschiebung der Einzelteile infolge einer Kraft in Breitenrichtung (äußere Krafteinwirkung) zu verhindern.

In dieser Breitenrichtung kann das Gleitstück demzufolge selbsthemmend ausgeführt werden. Daher kann sich das Gleitstück selbst einstellen, durch äußere Kraftwirkung ist das Gleitstück dagegen unverschieblich und kann somit die Last voll übertragen.

Aufgrund der in Höhenrichtung erforderlichen geringen Verschiebekraft, kann die Vorspannung der Einzelteile zueinander während des Teleskopiervorganges durch eine geringe Gegenkraft aufgehoben werden.

Der dadurch entstehende Luftspalt zwischen den Gleit- bzw. Anlageflächen führt zur Aufhebung der Reibung zwischen den Gleitpartnern, so dass mit relativ geringer Zylinderkraft teleskopiert werden kann. Ebenso haben auftretende Toleranzen (Lang- bzw. Kurzwelligkeiten) in den Schaftstücken keinen Einfluss auf die Gleitstücke; so dass Klemmungen der Teleskopteile an den Gleitstücken ausgeschlossen werden.

Das Aufheben der Vorspannung erfolgt vorzugsweise über eine Verriegelungseinheit (beispielsweise im Teleskopierzylinder integriert) oder über eine andere hier nicht näher beschriebene Zugvorrichtung, die vorzugsweise mit der Stahlbauverriegelung in geeigneter Weise gekoppelt ist.

Mit diesem System der mechanischen Kopplung wird gewährleistest, das der Luftspalt zwischen den Gleit- bzw. Anlageflächen nur während des eigentlichen Teleskopiervorganges vorhanden ist.

Erfindungsgemäß wird vorteilhafterweise eine qualitativ hochwertige Breiteneinstellung automatisch vorgenommen; Wartungspersonal muss nicht mehr in die Einstellung eingreifen. Nacharbeiten, wie z.B. das Nachstellen der Gleitstücke entfallen, wodurch eine große Zeitersparnis realisiert werden kann. Auch der Verschleiß der Gleitstücke wird automatisch nachgesteuert.

Gemäß einer Ausführungsform ist das erfindungsgemäße Gleitstück so ausgebildet, dass die Schrägfläche durch die keilförmige Ausgestaltung mindestens eines der Gleitstückteile erzeugt wird. Natürlich können beide Gleitstückteile zumindest abschnittsweise keilförmig ausgestaltet werden, um die erfindungsgemäße Bildung der Schrägfläche zu realisieren.

Die erfindungsgemäße Teleskopausleger-Gleitstückanordnung weist ein Gleitstück auf, wie es in mehreren Ausführungsformen oben beschrieben wurde, oder wie es im Weiteren noch im Einzelnen beschrieben wird. Bevorzugt ist dabei das Gleitstück an einem inneren Teleskopteil, insbesondere am Fußstück eines inneren Teleskopteils so angeordnet, dass ein äußeres Teleskopteil an ihm gleiten kann. Eine umgekehrte Anordnung ist grundsätzlich möglich.

Im Folgenden wird bei der Erläuterung bestimmter Ausführungsformen oftmals aufgezeigt, wie das Gleitstück im Fußstück eines Teleskopteils angeordnet ist. Dies ist als bevorzugte Ausführungsform zu verstehen; im Grunde kann die Anordnung auch im Teleskopteil (Schaft) selbst an geeigneten Stellen über dessen Länge verwirklicht werden.

Der Schubkeil des Gleitstücks kann beispielsweise über eine Federspanneinrichtung an dem inneren Teleskopteil befestigt sein, wobei mittels der Federspanneinrichtung die Position des Schubkeils gegenüber dem verschieblich angeordneten Gleitteil und damit auch die Position des Gleitteils eingestellt wird. Die Federspanneinrichtung kann eine Druckfederspanneinrichtung sein, die beispielsweise an einem Ende eine Befestigung zur Fixierung an dem inneren Teleskopteil (Fußstück) und am anderen Ende ein Druckelement aufweist, das eine Druckkraft auf den Schubkeil ausübt.

Der Schubkeil und das Gleitteil sind bevorzugt in einer Aufnahme im inneren Teleskopteil bewegbar und bewegungsgekoppelt angeordnet, so dass die Bewegung des Schubkeils in einer ersten Richtung eine Bewegung des Gleitteils in einer zweiten, hierzu im Wesentlichen quer angeordneten Richtung bewirken kann, und umgekehrt. Dies kann so ausgeführt werden, dass die Bewegungsrichtung des Schubkeils im Verhältnis zum Querschnitt des inneren Teleskopteils im Wesentlichen vertikal und im Wesentlichen tangential zum Teleskopteilumriss verläuft, und die Bewegungsrichtung des Gleitteils eine im Wesentlichen horizontale und im Wesentlichen radial vom inneren Teleskopteil nach außen verlaufende Richtung ist. Letztere Richtung ist die Richtung, die den Spalt vom inneren Teleskopteil zum äußeren Teleskopteil hin überbrückt.

Es besteht die Möglichkeit, den Schubkeil und das Gleitteil in einer Aufnahme im inneren Teleskopteil anzuordnen. Das Gleitteil steht dabei mit einem Abschnitt, der dessen Gleitfläche umfasst, durch eine Öffnung in der Außenwandung des inneren Teleskopteils nach außen hervor, und die Größe des Überstandes hängt mit dem Positionsverhältnis zwischen Schubkeil und Gleitstück zusammen.

Gemäß einer Ausführungsvariante ist die Vorspannung durch eine Einstellvorrichtung an der Vorspanneinrichtung, insbesondere durch eine Stellvorrichtung für die Druckfeder-Grundlänge einstellbar. Außerdem kann die Vorspannung so gewählt werden bzw. sich je nach Spaltmaß zwischen den Teleskopteilen so einstellen, dass das Gleitstück mit seiner Gleitfläche durch die Kraft des Schubkeils stets den Spalt zwischen dem inneren und dem äußeren Teleskopteil überbrückt.

Gemäß einer weiteren Ausführungsform der erfindungsgemäßen Gleitstückanordnung weist der Schubkeil einen Angriff bzw. Eingriff für einen Verriegelungsbolzen eines Teleskopierzylinders auf, wobei der Angriff/Eingriff und/oder der Bolzen derart ausgebildet sind, dass der Bolzen beim Einriegeln in das innere Teleskopteil den Schubkeil gegen die Vorspannung verschiebt und damit das Gleitteil zumindest teilweise aus der Kraftwirkung durch den Schubkeil befreit. Durch eine solche Maßnahme wird ein leichteres Teleskopieren der Teleskopteile untereinander ermöglicht, da die Reibungskräfte verringert werden. Der Angriff/Eingriff des Schubkeils und/oder der Bolzen können bei einer solchen Ausführungsform gefaste bzw. abgeschrägte zusammenwirkende Flächen aufweisen, welche beim Einriegeln die Verschiebung des Schubkeils bewirken. Grundsätzlich sind natürlich auch andere Möglichkeiten denkbar, um mit dem Verriegelungsbolzen den Schubkeil anzuheben bzw. etwas von dem Gleitteil zu entfernen, beispielsweise Hebel- oder Seilzugeinrichtungen zwischen Bolzen und Schubkeil bzw- Schubkeil und Stahlbau-Verriegelungseinheit.

Die Erfindung wird im Weiteren anhand bevorzugter Ausführungsformen näher erläutert. Sie kann alle hierin genannten Merkmale einzeln und in jedweder Kombination umfassen. In den beiliegenden Zeichnungen zeigen:
- Figuren 1 und 2: verschiedene Ansichten für einen Schubkeil einer erfindungsgemäßen Gleitstückanordnung;
- Figuren 3 und 4: verschiedene Ansichten für ein Gleitteil der erfindungsgemäßen Gleitstückanordnung;
- Figur 5: ein erfindungsgemäßes Gleitstückanordnung, eingebaut in einem Teleskopteil-Fußstück;
- Figur 6: einen Schubkeil mit einer Vorspanneinrichtung;
- Figuren 7A und 7B: die Vorspanneinrichtung aus Figur 6 im Detail;
- Figur 8: eine Ansicht eines Teleskopteil-Fußstücks mit einer Aufnahme für ein Gleitstück gemäß der Erfindung;
- Figuren 9 und 10: eine Ansicht des Fußstücks mit eingebautem Schubkeil;
- Figuren 11 bis 13: verschiedene Betriebssituationen für die Gleitstückanordnung mit unterschiedlichen Spaltmaßen zwischen den Teleskopteilen;
- Figur 14: eine vergrößerte Darstellung der Gleitstückanordnung mit aufgezeigten einwirkenden Kräften; und
- Figur 15: eine Ausführungsform einer erfindungsgemäßen Gleitstückanordnung mit Verriegelungsbolzen-Freistellung.

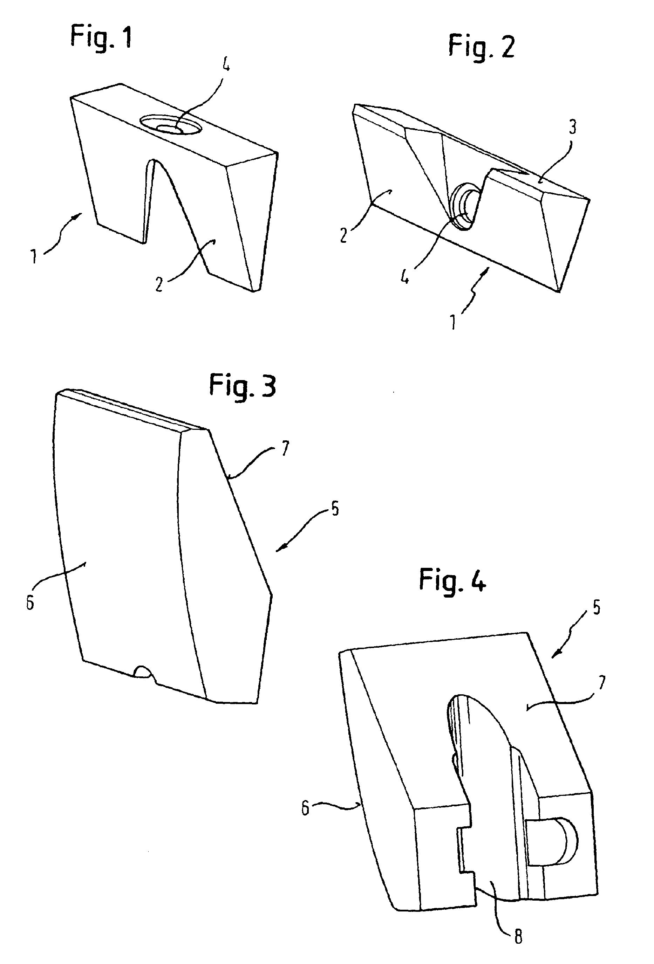

In den Figuren 1 bis 4 sind die Einzelteile eines Gleitstückes in einer Ausführungsform im Einzelnen und in perspektivischer Darstellung aufgezeigt.

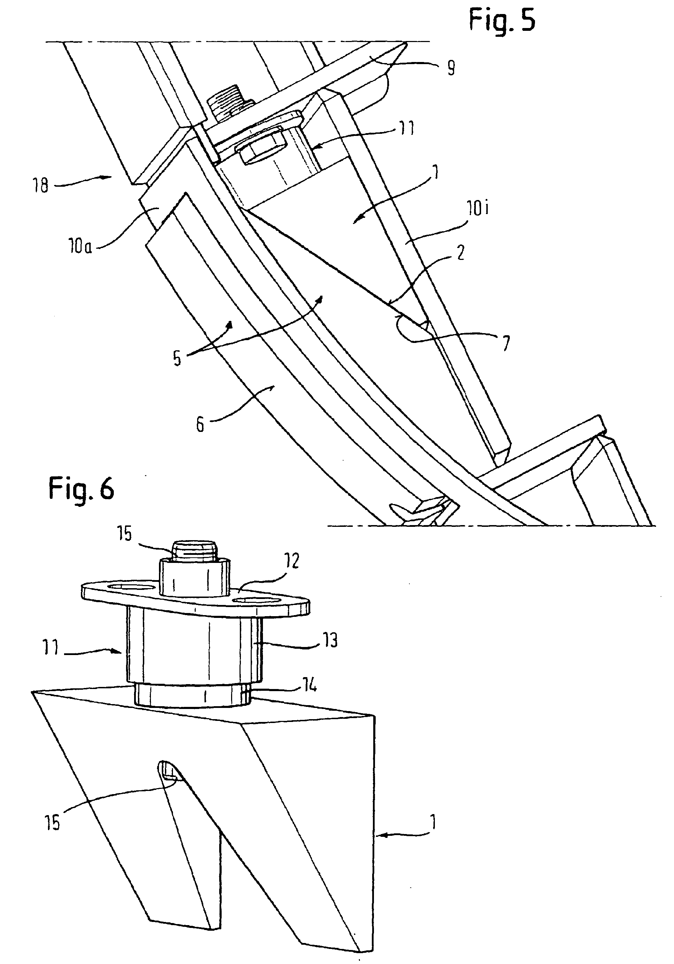

Das Gleitstück besteht aus zwei Teilen, nämlich dem Schubkeil 1 (Figuren 1 und 2) und dem Gleitteil 5 (Figuren 3 und 4). Der Schubkeil 1 weist die Keilfläche 2 auf sowie die Lagerfläche 3. Ebenfalls besitzt er eine Fixierungseinrichtung 4, die hier als abgesetzter Durchgang ausgebildet ist und für den Eingriff einer Vorspanneinrichtung bereitsteht, die im Weiteren noch detailliert erläutert wird. Das in den Figuren 3 und 4 dargestellte Gleitteil 5 bildet das Gegenstück zum Schubkeil 1, und es weist an seiner Außenseite die Gleitfläche 6 sowie an seiner Innenseite die Keilfläche 7 auf, welche mit der Keilfläche 2 des Schubkeils im Einbauzustand aufeinander trifft und zusammenwirkt. Ferner weist es noch eine Aussparung 8 auf. In der Aussparung 8 wird später, ebenso wie in der Aussparung des Schubkeils die nicht näher bezeichnet ist, ein Teil der Vorspanneinrichtung aufgenommen (siehe Figuren 5, 6, 9 und 10).

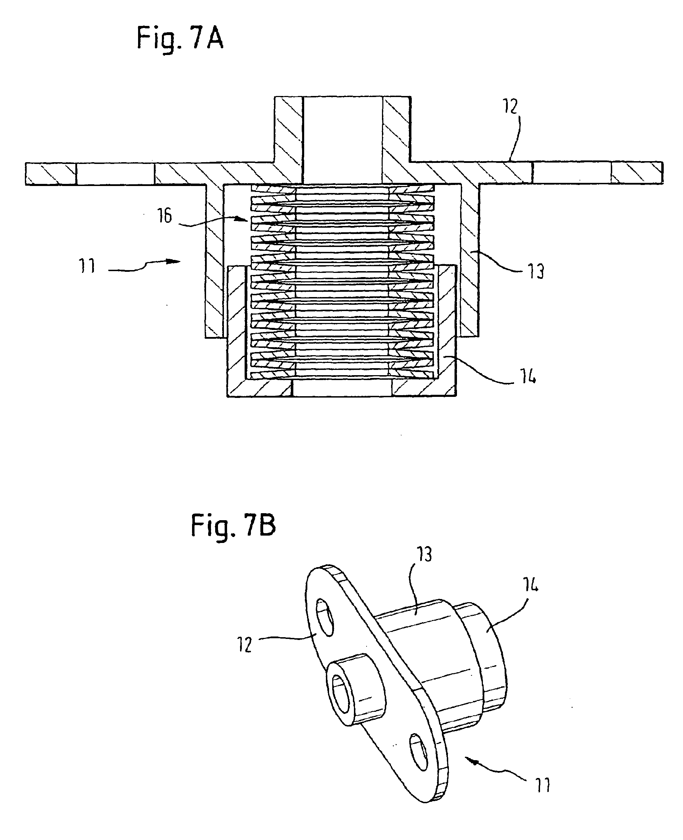

Im eingebauten Zustand ist das Gleitstück in der Figur 5 zu sehen. Das Gleitstück mit dem Schubkeil 1 und dem Gleitstück 5 liegt im Wesentlichen zwischen den Rahmenstegen 10a (außen) und 10i (innen), sowie unter dem Steg 9. Ein Teil des Gleitteils 5 ragt durch eine Öffnung im Rahmenteil 10a hindurch, und zwar so, dass die Gleitfläche 6 nach außen vorsteht. An dieser Gleitfläche 6 gleitet das äußere Teleskopteil, das in Figur 5 nicht dargestellt ist. In den Figuren 5 und 6 sowie in Figur 7 ist auch die Vorspanneinrichtung 11 zu sehen, die hier als Druckfeder-Vorspanneinrichtung ausgebildet ist. Sie weist ein Befestigungselement 12 sowie einen äußeren Zylindertopf 13 und einen inneren Federtopf 14 auf. Das Federpaket 16 (Figur 7A) sorgt dafür, dass der Schubkeil 1 von dem inneren Federtopf 14 nach unten gedrückt wird, und wegen der beiden aneinander liegenden Keilflächen des Schubkeils 1 und des Gleitteils 5 wird dadurch das Gleitteil 5 nach außen hin vorgespannt.

Wie aus Figur 5 hervorgeht, wird der Schubkeil auf der einen Seite (Fläche 3 in Figur 1) am Steg 10i geführt. Die Keilfläche 2 des Schubkeils 1 liegt an der Fläche 7 des Gleitteils 5, und hier ist besonders auf die Ausführung und Neigung dieser schrägen Keilfläche zu achten, sowie auf die Materialwahl, insbesondere in Bezug auf die Reibungszahl.

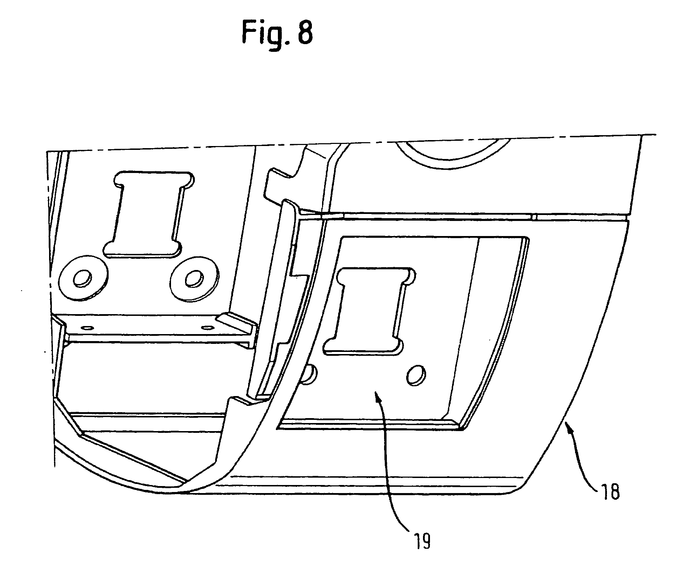

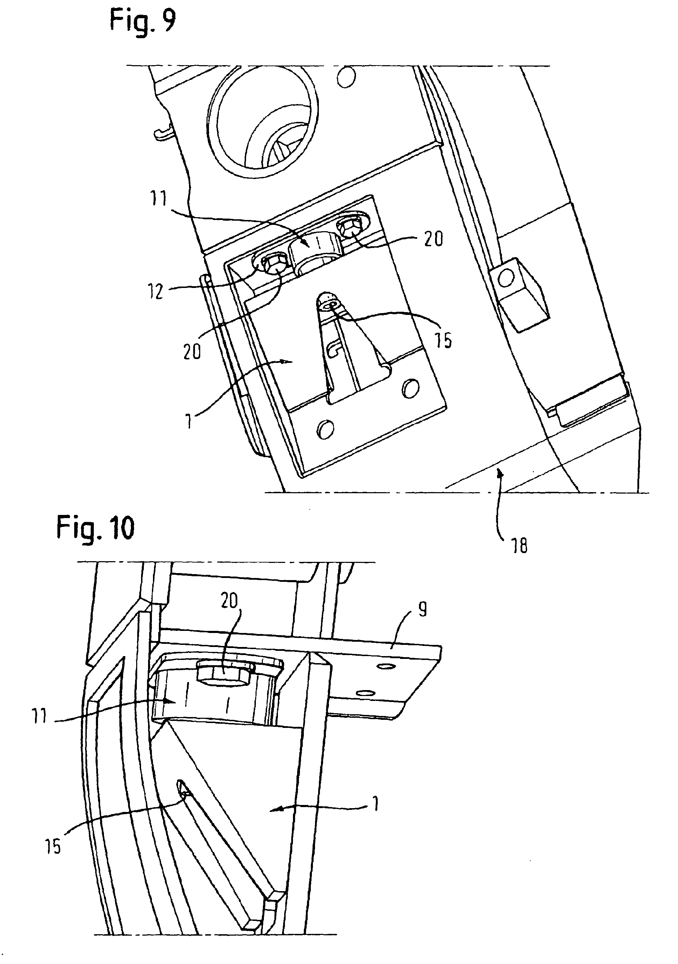

Durch eine im Wesentlichen vertikale Verschiebung des Schubkreis 1 erfolgt bei geeigneter Schrägung der Keilfläche eine horizontale Verschiebung (nach außen) des Gleitteils 5. Die hierbei auftretenden Betriebssituationen werden später noch im Einzelnen erläutert. Die Vorspanneinrichtung, die im Weiteren insgesamt auch als Federtopf 11 bezeichnet wird, ist an dem Steg 9 befestigt, und sie drückt mit dem inneren Federtopf 14 auf die umrandete Ausnehmung 4, die in Figur 1 dargestellt ist, und zwar von oben mit der Kraft des Federpakets 16. Der Durchgang in der Aufnahme 4 ermöglicht dabei den Durchtritt der Stellschraube 15, und diese Stellschraube 15 ist insbesondere in Figur 9 besser zu sehen. Die Figur 9 und die Figur 10 sind Ansichten des Teleskopteil-Fußstückes, ebenso wie die Figur 8, in der das Fußstück mit dem Bezugszeichen 18 und die Aufnahme (Tasche) für das Gleitstück mit dem Bezugszeichen 19 versehen worden sind. In den Darstellungen der Figuren 9 und 10 ist nun besser zu sehen, wie der Federtopf 11 mit seinem Befestigungselement 12 durch zwei Befestigungsschrauben 20 befestigt ist und wie die Stellschraube 15 in die Ausnehmung de Schubkeils 1 hineinragt. Die Stellschraube 15 weist einen Innensechskant auf, mittels dem sich die Ausgangslänge des Federpakets und damit die Ausgangs-Stellkraft einstellen lässt.

Der in Figur 10 gezeigte Zustand entspricht etwa einer halb gespannten Voreinstellung.

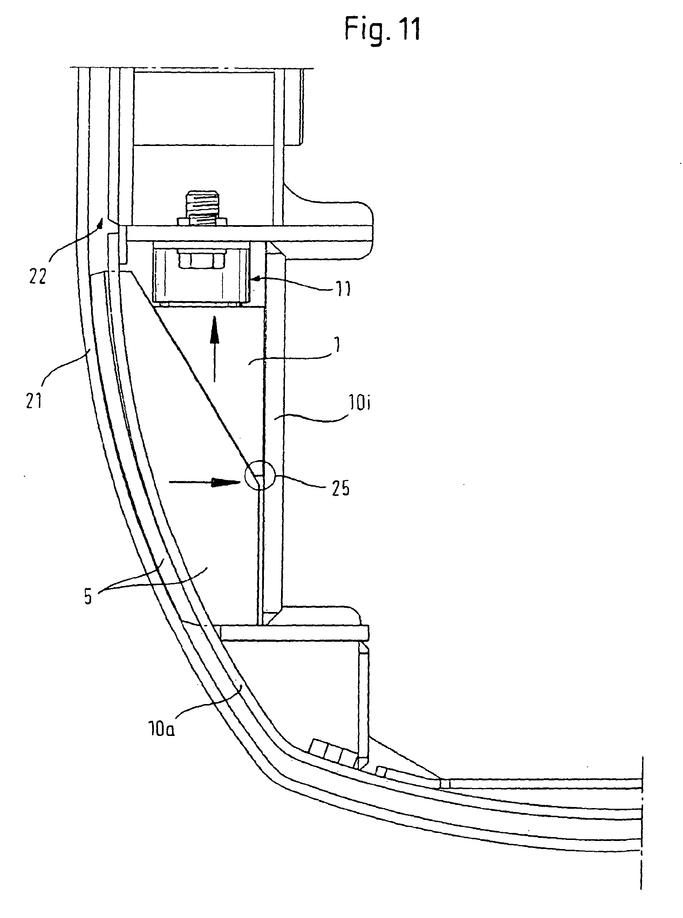

Anhand der Figuren 11, 12 und 13 werden nunmehr verschiedene Betriebszustände mit verschiedenen Spaltmaßen zwischen dem Fußstück des inneren Teleskopteils, hier dem äußeren Steg 10a, und dem Schaft des äußeren Teleskopteils aufgezeigt, wobei letzterer mit dem Bezugszeichen 21 versehen wurde.

Die Figur 11 zeigt eine Situation mit einem minimalen Spaltmaß, das durch den Pfeil 22 angedeutet wird. Der Schaft 21 befindet sich also hier sehr nahe an dem Steg 10a, und dies kann entweder durch eine besondere Betriebsstellung der Fall sein oder durch die vorhandenen Toleranzen, beispielsweise wenn das Fußstück mit maximal positiven Toleranzen und das Schaftstück 21 mit maximal negativen Toleranzen gefertigt wurde.

Das Federpaket des Federtopfes 11 ist in diesem Zustand vollständig gespannt, da das Schaftstück 21 das Gleitstück 5 sehr weit nach innen drückt (Pfeil), wodurch der Schubkeil 1 an dem Steg 10i entlang und an den aufeinander liegenden Keilflächen weit nach oben gedrückt wird. In besonderen Fällen ist das Federpaket im Federtopf 11 dabei auf Blocklänge vorgespannt. An der mit 25 bezeichneten Stelle ist zu sehen, wie weit der Schubkeil 1 nach oben gedrückt wurde.

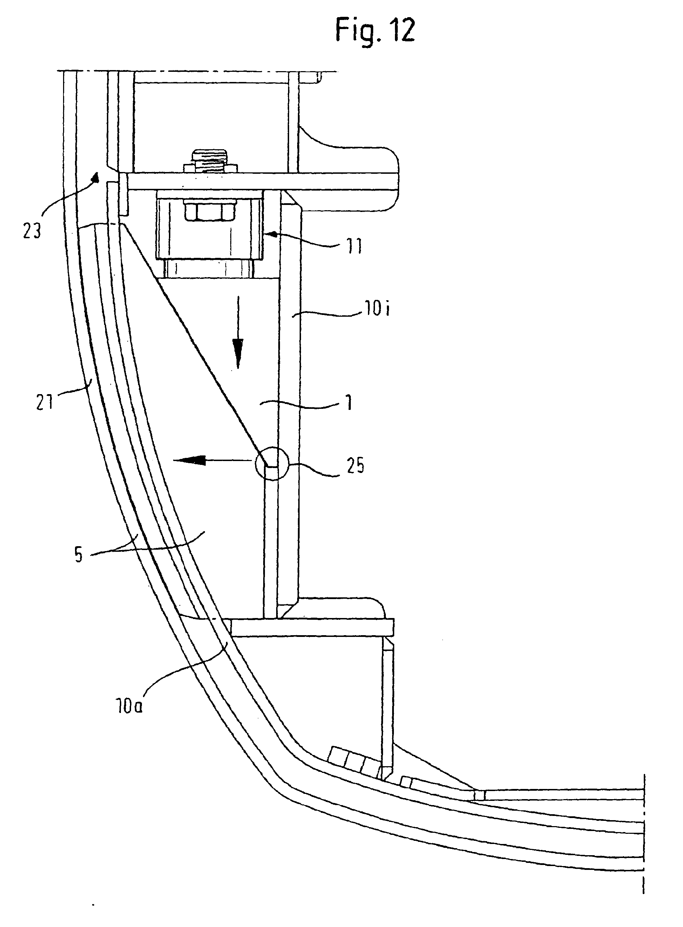

Bei einem Zustand mit normalen Spaltmaß, also entweder in einer entsprechenden Betriebssituation oder bei Nulltoleranz von Schaftstück 21 und Fußstück, ergibt sich ein Zustand wie er in Figur 12 dargestellt ist. Das Federpaket im Federtopf 11 ist halb vorgespannt, also auf halbem Maximalhub der Federn, und es drückt den Schubkeil 1 soweit nach unten (Pfeil), dass dieser das Gleitstück 5 nach außen schiebt bis es am äußeren Teleskopschaft 21 anliegt. Auch hier zeigt insbesondere ein Blick auf die hervorgehobene Stelle 25, dass sich der Schubkeil 1 hier in einer mittleren Position befindet.

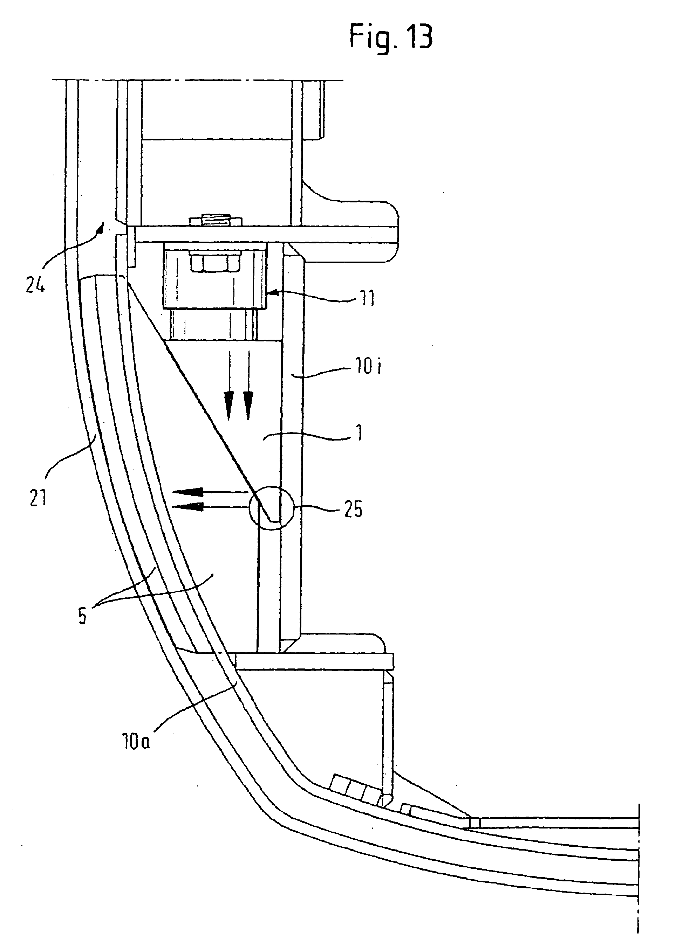

Die Figur 13 zeigt nun einen Zustand auf, bei dem ein maximales Spaltmaß zwischen Fußstück und dem nächstgrößeren Schaftstück 21 vorhanden ist. Auch dies kann in besonderen Betriebssituationen auftreten oder dann, wenn das Fußstück mit maximal negativen und das Schaftstück mit maximal positiven Toleranzen gefertigt ist. Hier ist zu sehen, dass das Federpaket im Federtopf 11 bei einem großen oder maximalen Hub liegt und den Schubkeil 1 sehr weit herunterdrückt. Insbesondere erkennt man dies an der wieder hervorgehobenen Stelle 25. Dabei schiebt der Schubkeit 1 an der schrägen Keilfläche das Gleitteil 5 sehr weit nach außen (links), bis der Spalt zwischen Fußstück (Steg 10a) und dem nächstgrößeren Schaftstück 21 überbrückt ist.

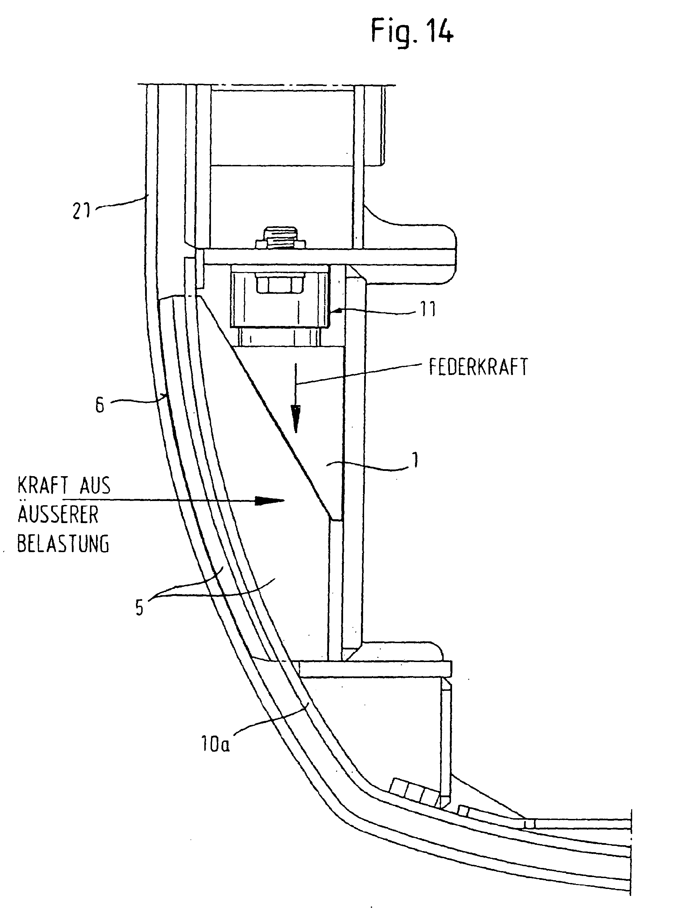

Es herrscht also bei verschiedenen Betriebszuständen bzw. bei allen möglichen Toleranzgestaltungen in jedem Fall ein Zustand, bei dem der äußere Schaft 21 an der Gleitfläche des Gleitteils 5 anliegt, und diese Situation ergibt sich aus der auf den Keil wirkenden Federkraft des Federtopfes 11. Eine Verschiebung des Gleitstücks infolge äußerer Krafteinwirkung wird durch den erfindungsgemäßen Aufbau des Gleitstückes ausgeschlossen. In Figur 14 sind diese Kräfte nochmals durch Pfeile dargestellt.

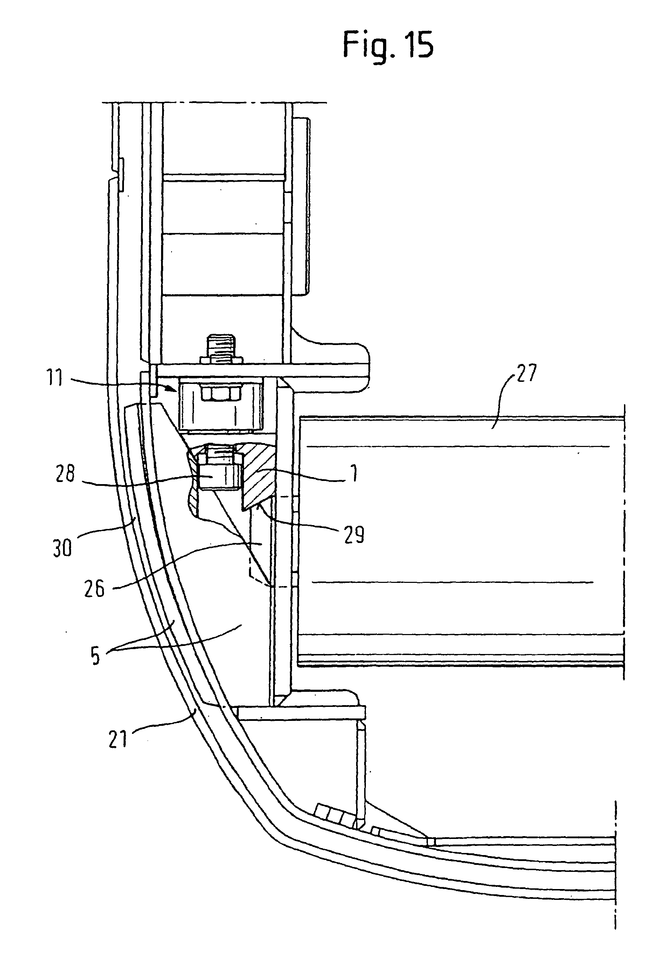

Eine weitere bevorzugte Ausführungsform ist in der Figur 15 gezeigt. Die Gleitstückanordnung entspricht hier der bisher gezeigten mit der Ausnahme, dass noch ein Verriegelungsbolzen 26 dargestellt ist, der aus dem Kopf eines Teleskopierzylinders heraus in einen Eingriff im Schubkeil 1 hineinragt. Es ist also in Figur 15 die verriegelte Stellung gezeigt. Der Verriegelungsbolzen hat die Fase 29, die bei seinem Eingriff in den Schubkeil 1 bewirkt, dass dieser etwas nach oben angehoben wird. Die Stellschraube 28 ist lose. Durch das Anheben des Keils 1 mit den Verriegelungsbolzen bei dessen Eingriff, d.h. bei der Einriegelung wird das Gleitteil 5 teilweise aus der Kraftwirkung durch den Schubkeil 1 befreit und liegt nicht mehr unter Vorspannung am äußeren Schaftstück 21 an (Luftspalt 30). Der Teleskopierzylinder muss daher weniger Kraft zum Teleskopieren aufbringen, und man erreicht eine Unabhängigkeit des gesamten Systems von den Toleranzen im äußeren Teleskopteil (Schaftstück). Weiterhin entfällt die Notwendigkeit, die Gleitstücke zu schmieren.

Bei dieser Ausführungsform ist es sinnvoll, auch den Eingriff im Schubkeil 1 mit einer zum Verriegelungsbolzen korrespondierenden Form zu versehen, also auch dort Fasen anzubringen.

## Patentansprüche

1. Teleskopkranausleger-Gleitstückanordnung mit einem Gleitstück, das mindestens zwei zusammenwirkende Gleitstückteile (1, 5) aufweist, die an einer Schrägfläche gegeneinander verschiebbar sind, so dass sich die Gesamtbreite des Gleitstücks je nach Lage der Gleitstückteile zueinander ändert, wobei das Gleitstück mindestens einen Schubkeil (1) und ein Gleitteil (5) aufweist, **dadurch gekennzeichnet, dass** der Schubkeil (1) des Gleitstücks über eine Federspanneinrichtung (11), insbesondere eine Druckfederspanneinrichtung, an einem Teleskopteil befestigt ist, wobei mittels der Federspanneinüchtung (11) die Position des Schubkeils (1) gegenüber dem Gleitteil (5) eingestellt wird.

2. Gleitstückanordnung nach Anspruch 1, **dadurch gekennzeichnet, dass** die Schrägfläche so ausgebildet ist, dass die Vorspannung entlang einer steilen Schrägfläche wirkt und die äußere aufzunehmende Kraft in Breitenrichtung auf eine flache Schrägfläche wirkt bzw. trifft.

3. Gleitstückanordnung nach Anspruch 1 oder 2, **dadurch gekennzeichnet, dass** die Schrägfläche durch die keilförmige Ausgestaltung mindestens eines der Gleitstückteile (1, 5) erzeugt wird.

4. Gleitstückanordnung nach einem der Ansprüche 1 bis 3, **dadurch gekennzeichnet, dass** durch die Positionierung des Schubkeils (1) gegenüber dem Gleitteil (5) eine Gleitfläche (6) des Gleitteils (5) verschoben werden kann.

5. Gleitstückanordnung mit einem Gleitstück gemäß einem der Ansprüche 1 bis 4, **dadurch gekennzeichnet, dass** das Gleitstück an einem inneren Teleskopteil, insbesondere am Fußstück (18) eines inneren Teleskopteils so angeordnet ist, dass ein äußeres Teleskopteil (21) an ihm gleiten kann.

6. Gleitstückanordnung nach Anspruch 5, **dadurch gekennzeichnet, dass** der Schubkeil (1) des Gleitstücks über die Federspanneinrichtung (11) an dem inneren Teleskopteil befestigt ist, der Gleitteil (5) verschieblich angeordnet ist und auch die Position des Gleitteils (5) mittels der Federspannvorrichtung (11) eingestellt wird.

7. Gleitstückanordnung nach Anspruch 5 oder 6, **dadurch gekennzeichnet, dass** die Federspanneinrichtung (11) an einem Ende eine Befestigung (12) zur Fixierung an dem inneren Teleskopteil (18) und am anderen Ende ein Druckelement aufweist, das eine Druckkraft auf den Schubkeil (1) ausübt.

8. Gleitstückanordnung nach einem der Ansprüche 5 bis 7, **dadurch gekennzeichnet, dass** der Schubkeil (1) und das Gleitteil (5) in einer Aufnahme (19) im inneren Teleskopteil bewegbar und bewegungsgekoppelt angeordnet sind, so dass die Bewegung des Schubkeils (1) in einer ersten Richtung eine Bewegung des Gleitteils (5) in einer zweiten, hierzu im wesentlichen quer angeordneten Richtung bewirken kann, und umgekehrt.

9. Gleitstückanordnung nach Anspruch 8, **dadurch gekennzeichnet, dass** die Bewegungsrichtung des Schubkeils (1) im Verhältnis zum Querschnitt des inneren Teleskopteils im wesentlichen vertikal und im wesentlichen tangential zum Teleskopteilumriss verläuft, und die Bewegungsrichtung des Gleitteils (5) eine im wesentlichen horizontale und im wesentlichen radial vom inneren Teleskopteil nach außen verlaufende Richtung ist.

10. Gleitstückanordnung nach einem der Ansprüche 5 bis 9, **dadurch gekennzeichnet, dass** der Schubkeil (1) und das Gleitteil (5) in einer Aufnahme (19) im inneren Teleskopteil (18) angeordnet sind und das Gleitteil (5) mit einem Abschnitt, der dessen Gleitfläche (6) umfasst, durch eine Öffnung in der Außenwandung des inneren Teleskopteils nach außen hervorsteht, wobei die Größe des Überstandes mit dem Positionsverhältnis zwischen Schubkeil (1) und Gleitstück (5) zusammenhängt.

11. Gleitstückanordnung nach einem der Ansprüche 6 bis 10, **dadurch gekennzeichnet, dass** die Vorspannung durch eine Einstellvorrichtung an der Vorspanneinrichtung, insbesondere durch eine Stellvorrichtung für die Druckfeder-Grundlänge, einstellbar ist.

12. Gleitstückanordnung nach einem der Ansprüche 5 bis 11, **dadurch gekennzeichnet, dass** die Vorspannung so gewählt wird bzw. sich so einstellt, dass das Gleitstück (5) mit seiner Gleitfläche (6) durch die Kraft des Schubkeils (1) stets den Spalt zwischen dem Inneren und dem äußeren Teleskopteil überbrückt.

13. Gleitstückanordnung nach einem der Ansprüche 5 bis 12, **dadurch gekennzeichnet, dass** der Schubkeil (1) einen Angriff bzw. Eingriff für einen Verriegelungsbolzens (26) eines Teleskopierzylinders (27) aufweist, wobei der Angriff/Eingriff und/oder der Bolzen (26) derart ausgebildet sind, dass der Bolzen (26) beim Einriegeln in das innere Teleskopteil den Schubteil (1) gegen die Vorspannung verschiebt und damit das Gleitteil (5) zumindest teilweise aus der Kraftwirkung durch den Schubkeil (1) befreit.

14. Gleitstückanordnung nach Anspruch 13, **dadurch gekennzeichnet, dass** der Angriff/Eingriff des Schubkeils (1) und/oder der Bolzen (26) gefaste bzw. abgeschrägte zusammenwirkende Flächen aufweisen, welche beim Einriegeln die Verschiebung des Schubkeils (1) bewirken.

15. Gleitstückanordnung nach einem der Ansprüche 5 bis 12, **dadurch gekennzeichnet, dass** der Schubkeil (1) einen An- bzw. Eingriff mit einer Ziehvorrichtung bzw. Kopplungseinheit zur Stahlbauverriegelung aufweist, wobei die Zieh- bzw. Kopplungseinheit so ausgebildet wird, dass bei gezogener Stahlbauverriegelung der Schubkeil entgegen der Vorspannung verschoben wird, und damit das Gleitteil wenigstens teilweise aus der Kraftwirkung durch den Schubkeil befreit wird.

## Claims

1. A telescopic crane jib sliding block arrangement, comprising a sliding block which comprises at least two co-operating sliding block parts (1, 5) which can be shifted relative to each other on an oblique surface, such that the overall width of the sliding block varies depending on the position of the sliding block parts with respect to each other, wherein the sliding block comprises at least one push wedge (1) and one sliding part (5), **characterised in that** the push wedge (1) of the sliding block is fastened to a telescopic part via a spring tensioning device (11), in particular a pressure spring tensioning device, wherein the position of the push wedge (1) relative to the sliding part (5) is adjusted by means of the spring tensioning device (11).

2. The sliding block arrangement according to claim 1, **characterised in that** the oblique surface is designed such that the pre-tensioning acts along a steep oblique surface, and the external force to be absorbed acts on or runs against a flat oblique surface in the width direction.

3. The sliding block arrangement according to claim 1 or 2, **characterised in that** the oblique surface is created by configuring at least one of the sliding block parts (1, 5) to be wedge-shaped.

4. The sliding block arrangement according to any one of claims 1 to 3, **characterised in that** a sliding surface (6) of the sliding part (5) can be shifted by positioning the push wedge (1) relative to the sliding part (5).

5. The sliding block arrangement comprising a sliding block in accordance with any one of claims 1 to 4, **characterised in that** the sliding block is arranged on an inner telescopic part, in particular on the footing (18) of an inner telescopic part, such that an outer telescopic part (21) can slide on it.

6. The sliding block arrangement according to claim 5, **characterised in that** the push wedge (1) of the sliding block is fastened to the inner telescopic part via the spring tensioning device (11), the sliding part (5) is arranged such that it can shift, and the position of the sliding part (5) is also adjusted by means of the spring tensioning device (11).

7. The sliding block arrangement according to claim 5 or 6, **characterised in that** one end of the spring tensioning device (11) comprises a fastening (12) for fixing to the inner telescopic part (18), and the other end comprises a pressure element which exerts a pressure force on the push wedge (1).

8. The sliding block arrangement according to any one of claims 5 to 7, **characterised in that** the push wedge (1) and the sliding part (5) are arranged in a recess (19) in the inner telescopic part such that they can be moved and coupled in their movement, such that the movement of the push wedge (1) in a first direction can generate a movement of the sliding part (5) in a second direction which is arranged substantially transverse to it, and vice versa.

9. The sliding block arrangement according to claim 8, **characterised in that** the movement direction of the push wedge (1) extends substantially vertically in relation to the cross-section of the inner telescopic part and substantially tangentially with respect to the contour of the telescopic part, and the movement direction of the sliding part (5) is a substantially horizontal direction which extends substantially radially outwards from the inner telescopic part.

10. The sliding block arrangement according to any one of claims 5 to 9, **characterised in that** the push wedge (1) and the sliding part (5) are arranged in a recess (19) in the inner telescopic part (18), and a portion of the sliding part (5) which includes its sliding surface (6) projects outwards through an orifice in the external wall of the inner telescopic part, wherein the size of the projection relates to the positional relationship between the push wedge (1) and the sliding block (5).

11. The sliding block arrangement according to any one of claims 6 to 10, **characterised in that** the pre-tensioning can be adjusted by an adjusting device on the pre-tensioning device, in particular by a regulating device for the base length of the pressure spring.

12. The sliding block arrangement according to any one of claims 5 to 11, **characterised in that** the pre-tensioning is selected or adjusted such that the sliding surface (6) of the sliding block (5) always bridges the gap between the inner and outer telescopic parts, due to the force of the push wedge (1).

13. The sliding block arrangement according to any one of claims 5 to 12, **characterised in that** the push wedge (1) comprises a contact or engagement for a latching bolt (26) of a telescoping cylinder (27), wherein the contact/engagement and/or the bolt (26) are designed such that when the bolt (26) is latched into the inner telescopic part, it shifts the push wedge (1) counter to the pre-tensioning and therefore at least partially relieves the sliding part (5) of the force acting due to the push wedge (1).

14. The sliding block arrangement according to claim 13, **characterised in that** the contact/engagement of the push wedge (1) and/or the bolt (26) comprise chamfered or angled co-operating surfaces which cause the push wedge (1) to be shifted during latching in.

15. The sliding block arrangement according to any one of claims 5 to 12, **characterised in that** the push wedge (1) comprises a contact or engagement including a drawing device or coupling unit for structural steel latching, wherein the drawing or coupling unit is designed such that in the case of drawn structural steel latching, the push wedge is shifted counter to the pre-tensioning, and the sliding part is therefore at least partially relieved of the force acting due to the push wedge.

## Revendications

1. Agencement de coulisseau pour flèche de grue télescopique avec un coulisseau qui comporte au moins deux parties de coulisseau (1, 6) coopérant qui peuvent coulisser l'une par rapport à l'autre sur une surface oblique, de manière que la largeur totale du coulisseau varie suivant la position réciproque des parties de coulisseau, le coulisseau comportant au moins un coin de poussée (1) et une partie coulissante (5), **caractérisé en ce que** le coin de poussée (1) du coulisseau est fixé sur une partie télescopique par un dispositif de tension à ressort (11), en particulier un dispositif de tension à ressort de pression, la position du coin de poussée (1) étant réglée par rapport à la partie coulissante (5) au moyen du dispositif de tension à ressort (11).

2. Agencement de coulisseau selon la revendication 1, **caractérisé en ce que** la surface oblique est réalisée de manière que la précontrainte agisse le long d'une surface oblique raide et que la force extérieure à absorber agisse ou parvienne dans le sens de la largeur sur une surface oblique plate.

3. Agencement de coulisseau selon l'une quelconque des revendications 1 ou 2, **caractérisé en ce que** la surface oblique est produite par la forme en coin d'au moins l'une des parties de coulisseau (1, 5).

4. Agencement de coulisseau selon l'une quelconque des revendications 1 à 3, **caractérisé en ce que** par le positionnement du coin de poussée (1) par rapport à la partie coulissante (5), une surface de glissement (6) de la partie coulissante (5) peut être déplacée.

5. Agencement de coulisseau avec un coulisseau selon l'une quelconque des revendications 1 à 4, **caractérisé en ce que** le coulisseau est disposé sur une partie télescopique intérieure, en particulier sur l'embase (18) d'une partie télescopique intérieure de manière qu'une partie télescopique extérieure (21) puisse glisser sur celui-ci.

6. Agencement de coulisseau selon la revendication 5, **caractérisé en ce que** le coin de poussée (1) du coulisseau est fixé sur la partie télescopique intérieure par l'intermédiaire du dispositif de tension à ressort, la partie coulissante (5) est disposée de manière à coulisser et la position de la partie coulissante (5) est réglée aussi au moyen du dispositif de tension à ressort (11).

7. Agencement de coulisseau selon l'une quelconque des revendications 5 ou 6, **caractérisé en ce que** le dispositif de tension à ressort (11) comporte, à une extrémité une fixation (12) pour la fixation sur la partie télescopique intérieure (18) et, à l'autre extrémité, un élément de pression qui exerce une force de pression sur le coin de poussée (1).

8. Agencement de coulisseau selon l'une quelconque des revendications 5 à 7, **caractérisé en ce que** le coin de poussée (1) et la partie coulissante (5) sont disposés et couplés en déplacement dans un logement (19) de la partie télescopique intérieure de manière que le mouvement du coin de poussée (1) dans une première direction puisse provoquer un mouvement de la partie coulissante (5) dans une seconde direction, sensiblement perpendiculaire à la première, et inversement.

9. Agencement de coulisseau selon la revendication 8, **caractérisé en ce que** la direction de mouvement du coin de poussée (1) s'étend par rapport à la section de la partie télescopique intérieure, sensiblement verticalement et sensiblement tangentiellement au contour de la partie télescopique, et la direction de mouvement de la partie coulissante (5) est une direction s'étendant sensiblement horizontalement et sensiblement radialement depuis la partie télescopique intérieure vers l'extérieur.

10. Agencement de coulisseau selon l'une quelconque des revendications 5 à 9, **caractérisé en ce que** le coin de poussée (1) et la partie coulissante (5) sont disposés dans un logement (19) de la partie télescopique intérieure (18), et la partie coulissante (5) dépasse vers l'extérieur par un segment, qui comprend sa surface de glissement (6), à travers une ouverture de la paroi extérieure de la partie télescopique intérieure, la dimension du dépassement dépendant de la relation de position entre le coin de poussée (1) et le coulisseau (5).

11. Agencement de coulisseau selon l'une quelconque des revendications 6 à 10, **caractérisé en ce que** la précontrainte est réglable par un dispositif de réglage sur le dispositif de précontrainte, en particulier par un dispositif de réglage pour la longueur de base du ressort de pression.

12. Agencement de coulisseau selon l'une quelconque des revendications 5 à 11, **caractérisé en ce que** la précontrainte est sélectionnée ou réglée de manière que le coulisseau (5) avec sa surface de glissement (6) franchisse toujours la fente entre la partie télescopique intérieure et la partie télescopique extérieure, du fait de la force du coin de poussée (1).

13. Agencement de coulisseau selon l'une quelconque des revendications 5 à 12, **caractérisé en ce que** le coin de poussée (1) présente une partie de prise ou d'engagement pour un boulon de verrouillage (26) d'un cylindre télescopique (27), la partie de prise/engagement et/ou le boulon (26) étant conçus de manière que lors du verrouillage à l'intérieur de la partie télescopique, le boulon (26) déplace le coin de poussée (1) à l'encontre de la précontrainte et libère ainsi, au moins en partie, la partie coulissante (5) de l'action de la force exercée par le coin de poussée (1).

14. Agencement de coulisseau selon la revendications 13, **caractérisé en ce que** partie de prise/engagement et/ou le boulon (26) présentent des surfaces biseautées ou chanfreinées coopérantes qui provoquent le coulissement du coin de poussée (1) lors du verrouillage du coin de poussée (1).

15. Agencement de coulisseau selon l'une quelconque des revendication 5 à 12, **caractérisé en ce que** le coin de poussée (1) présente une partie de prise ou d'engagement avec un dispositif de traction ou unité d'accouplement pour le verrouillage de construction en acier, l'unité de traction ou d'accouplement étant conçue de manière que lorsque le verrouillage de construction en acier est tiré, le coin de poussée soit déplacé à l'encontre de la précontrainte, et ainsi la partie coulissante soit libérée, en moins en partie, de l'action de la force exercée par le coin de poussée.
